# EUROPÄISCHE PATENTSCHRIFT

(11) **EP 0 670 026 B1**
(45) Veröffentlichungstag und Bekanntmachung des Hinweises auf die Patenterteilung: **17.02.1999**
(21) Anmeldenummer: 94928754.4
(22) Anmeldetag: 29.09.1994
(51) Int. Cl.: F24F 11/00

(54) **ZULUFTGERÄT**
AIR SUPPLY DEVICE
DISPOSITIF D'AMENEE D'AIR

(30) Priorität: 29.09.1993 DE 4333194
(43) Veröffentlichungstag der Anmeldung: 06.09.1995
(73) Patentinhaber: LUNOS-LÜFTUNG GmbH & Co Ventilatoren KG, D-13593 Berlin (DE)
(72) Erfinder: SCHÖTTLER, Hans-Jürgen, D-10623 Berlin (DE)
(74) Vertreter: Christiansen, Henning, Dipl.-Ing.
(86) Internationale Anmeldenummer: DE9401177
(87) Internationale Veröffentlichungsnummer: WO9509329

(56) Entgegenhaltungen:
- WO-A-89/12269
- GB-A- 2 184 583
- GB-A- 2 242 515
- GB-A- 2 244 148

## Beschreibung

Die Erfindung betrifft eine Zuluftgeräteanordnung nach dem Oberbegriff des Anspruchs 1.

Eine derartige Anordnung ist aus der Druckschrift GB-A-2 242 515 bekannt.

Mit einem aus der EP-B-0 068 917 bekannten Zuluftgerät ist es möglich, unter Zugrundelegung eines Meßsignals eines im Gerät angeordneten Hygrometers in einem zu belüftenden Raum über eine analoge Positionssteuerung einer den effektiven Strömungsquerschnitt des Zuluftgerätes begrenzenden Luftklappe die Frischluftzufuhr zu steuern.

Das Stellglied ist dabei mit dem Meßglied des Hygrometers direkt mechanisch verbunden, so daß eine Einspeisung anderer Größen in den Steuervorgang nicht auf einfache Weise möglich ist.

Die in der genannten Druckschrift vorgesehene Feuchtesteuerung ist zudem für Zuluftgeräte in Aufenthaltsräumen einer Wohnung insofern nicht optimal, weil diese nur ein unzureichendes Kriterium für den Belüftungsbedarf bildet und gerade in Aufenthaltsräumen nur relativ geringfügigen Schwankungen unterworfen ist.

Die gattungsbildende GB-A-2 242 515 beschreibt eine Anordnung mit mehreren Fühlern, die die Atemluftqualität, die Innentemperatur sowie die Anwesenheit von Personen im Innenraum erfassen,, und einem Mikrorechner, der aus diesen Fühlersignalen ein Steuersignal zur Steuerung der das Zuluftgerät passierenden Zuluftmenge ableitet.

Der Erfindung liegt die Aufgabe zugrunde, eine Zuluftgeräteanordnung der eingangs genannten Gattung zu schaffen, die es gestattet, insbesondere im Zusammenwirken mit einem aktiven Abluftgerät, die Frischluftzufuhr in einem Innenraum genauer und zuverlässiger zu steuern.

Diese Aufgabe wird gelöst durch eine Zuluftgeräteanordnung, die die Merkmale des Anspruchs 1 aufweist.

Die Erfindung schließt den Gedanken ein, eine Anordnung der gattungsgemäßen Art zu schaffen, die die Belüftung (und damit indirekt auch die Entlüftung) einer Wohneinheit aufgrund des Zuluftbedarfs unter Berücksichtigung der Luftqualität oder der thermischen Behaglichkeit und/oder von Daten, die Benutzergewohnheiten reflektieren, als Führungsgröße bei zusätzlicher Verarbeitung von die Strömungsverhältnisse im Innen- bzw. Außenraum reflektierenden Größen bewerkstelligt.

In vorteilhaften Ausbildungen ist dieses Gerät im Zusammenwirken mit weiteren Einzelbe- bzw. -entlüftungsgeräten derart einsetzbar, daß unter Verzicht auf eine zentrale Steuerung und eine separate Feuchteerfassung bei den Belüftern eine energieökonomische und den Behaglichkeitsanforderungen der Bewohner gerecht werdende Steuerung des Luftvolumenstromes in einer Wohnung möglich wird.

Mit dem erfindungsgemäßen Konzept wird das - vorzugsweise mit konstanter Grundlast entsprechend dem Entfeuchtungsbedarf - abgeführte Luftvolumen unter Beachtung der Luftströmungen im Innen- und/oder Außenraum in denjenigen Aufenthaltsräumen ersetzt, in denen aus Gründen der Raumnutzung ein Luftersatzbedarf besteht. Das Abluftgerät ist dagegen in den zentralen Prozeßräumen (Küche, Bad), wo zusätzlich anfallende Feuchtigkeit durch eine entsprechende Erhöhung des abgeführten Volumens schnell beseitigt werden kann. Die damit verbundene Luftzufuhr erfolgt dann mittels der erfindungsgemäßen Vorrichtung in denjenigen Räumen, in denen en Luftersatzbedarf besteht.

Zweckmäßige Ausgestaltungen sind den Unteransprüchen zu entnehmen.

Weitere Merkmale und Zweckmäßigkeiten der Erfindung ergeben sich aus der Beschreibung von Ausführungsbeispielen anhand der Figuren.

Von den Figuren zeigen:
Fig. 1 eine schematische Darstellung der Luftströme in eine, innerhalb einer und aus einer Wohnung mit mehreren Zuluftgeräten und einem Abluftgerät.
Fig. 2 eine auf Fig. 1 aufbauende Darstellung eines gesteuerten lufttechnischen Systems für ein Wohngebäude unter Einschluß des erfindungsgemäßen Abluftgerätes,
Fig. 3 das Prinzipschaltbild der Steuerung des erfindungsgemäßen Abluftgerätes in einer Ausführungsform,
Fig. 4 eine schematische Darstellung einer der Steuerung nach Fig. 3 zugeordneten Hierarchie von Signalübertragungsfenstern in Form von Zeitschlitzen,
Fig. 5 eine Ansicht des mechanischen Aufbaus einer Ausführungsform des erfindungsgemäßen Zuluftgerätes (perspektivische Gesamtansicht) und
Fig. 6 eine Prinzipskizze der Klappensteuerung des erfindungsgemäßen Zuluftgerätes in einer Ausführungsform.

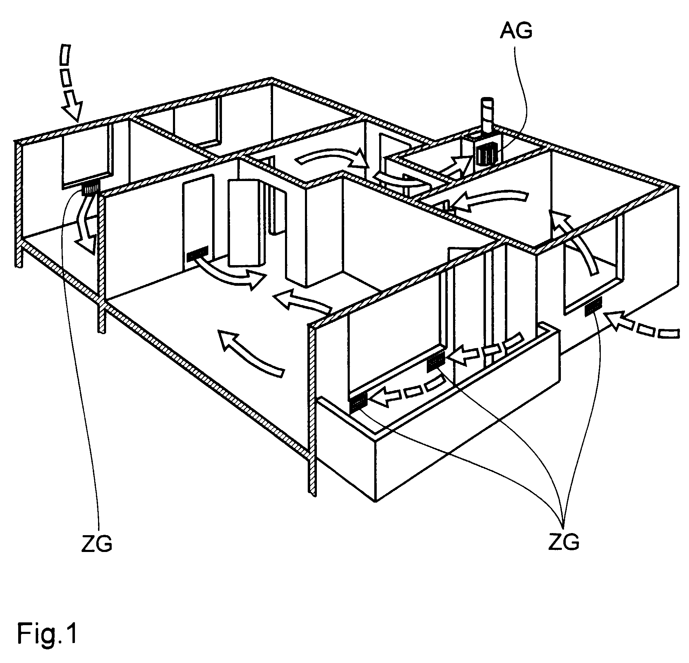

Fig. 1 zeigt in einer perspektischen Darstellung schematisch die strömungstechnischen Verhältnisse in und in der Umgebung einer Wohnung als Teil eines Hauses mit einer erfindungsgemäßen lufttechnischen Ausrüstung.

Es ist zu erkennen, wie durch mehrere Zuluftgeräte ZG Luft in die Aufenthalts räume und von diesen - insbesondere über zu diesem Zweck vorgesehene Überströmöffnungen in den Innentüren - ins Bad strömt und über ein dort vorgesehenes Abluftgerät AG in einen Fortluftkanal abgesaugt wird.

Anstelle eines Abluftgerätes AG können auch mehrere Geräte, insbesondere ein zweites Gerät in der Küche als zweitem wesentlichen Prozeßraum jeder Wohnung, vorgesehen sein.

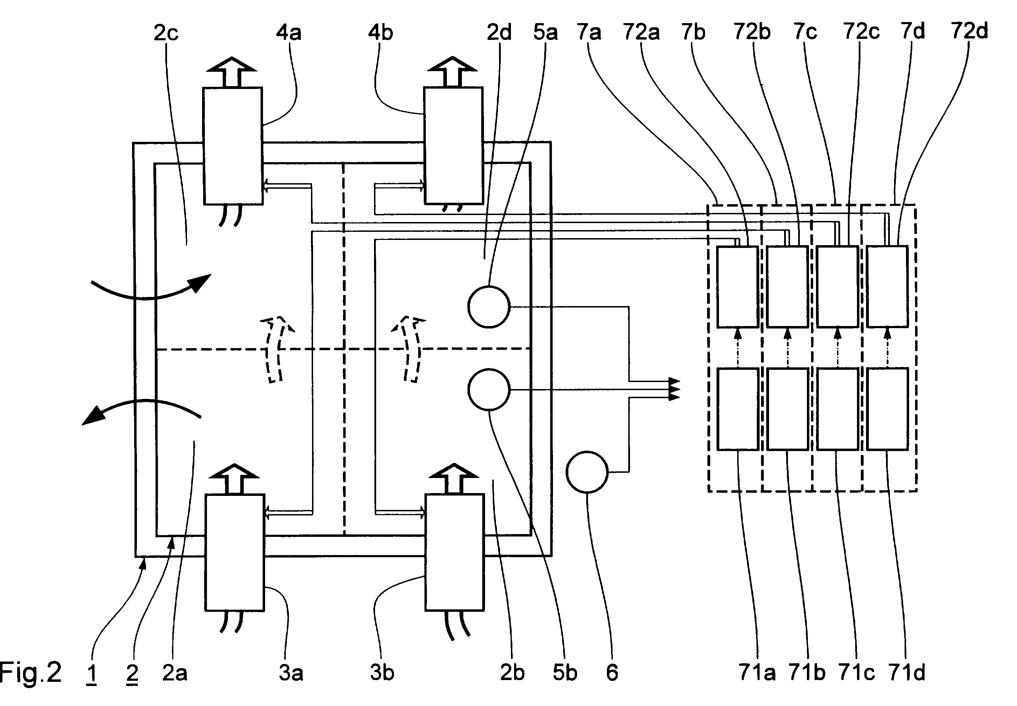

In Fig. 2 ist schematisch und beispielhaft dargestellt, wie der Luftstrom grundsätzlich automatisch gesteuert werden kann:

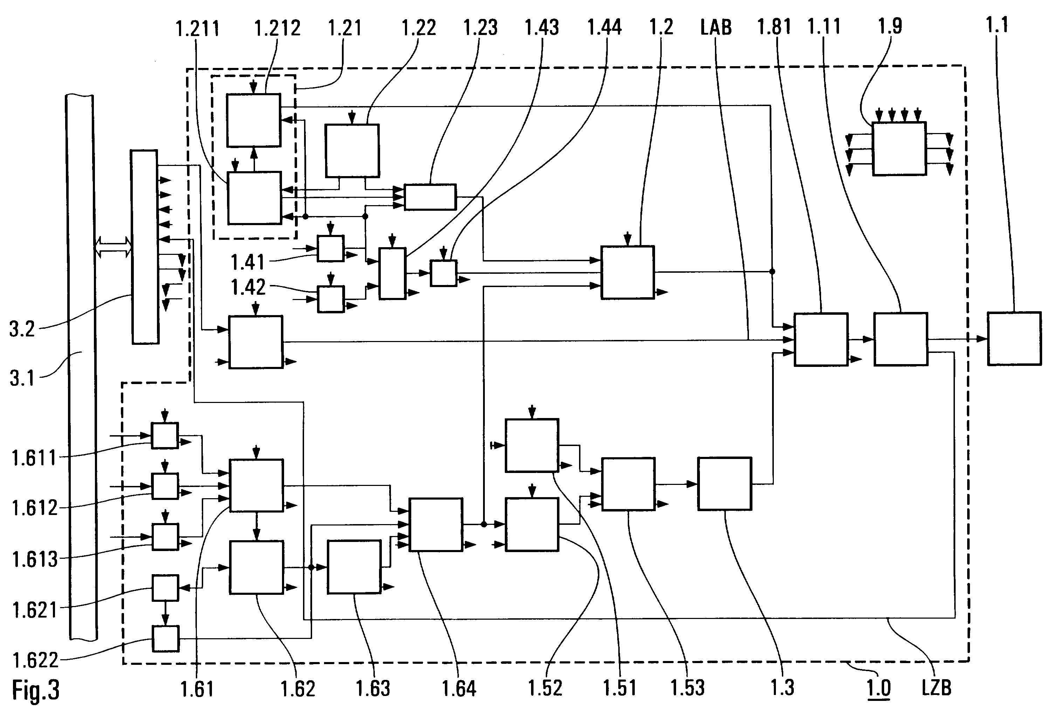

Der Außenraum 1 einer Wohnung ist mit deren Innenraum 2 (der gemäß Fig. 3 aus einem Wohnraum 2a und einem Schlafraum 2b als Aufenthaltsräumen sowie einer Küche 2c und einem Bad 2d als sog. Prozeßräumen besteht) über je ein im Wohnraum 2a und im Schlafraum 2b angeordnetes Zuluftgerät 3a bzw. 3b, über die dem Innenraum 2 Frischluft zugeführt wird, sowie über je ein der Küche 2c und dem Bad 2d zugeordnetes Abluftgerät 4a bzw. 4b, über die Luft aus dem Innenraum 2 in den Außenraum 1 abgesaugt wird, verbunden. Die Anzahl der Zu- und Abluftgeräte kann sich von der gezeigten unterscheiden, grundsätzlich bis hin zum völligen Verzicht auf ein Zu- oder Abluftgerät unter bestimmten Bedingungen, die im weiteren noch erörtert werden.

Daneben gibt es - da eine Gebäudehülle niemals völlig dicht gestaltet werden kann - weitere Verbindungsstellen, an denen Neben-Zuluft und/oder Neben-Abluft zwischen dem Innenraum und dem Außenraum strömt.

Im Innenraum 2 sind zwei Innenfühler 5a und 5b, von denen der Fühler 5a etwa der Erfassung einer lufttechnisch relevanten physikalischen Größe (Lufttemperatur, Innenfeuchte, Umschließungsflächentemperatur, Luftgeschwindigkeit, Konzentration chemischer Stoffe in der Luft o.ä.) und der Fühler 5b der Erfassung der Anwesenheit von Personen im Innenraum dient, angeordnet, während im Außenraum 1 ein Fühler 6 zur Erfassung einer lufttechnisch relevanten Größe im Außenraum (etwa der Außentemperatur, -feuchte oder -luftgeschwindigkeit) angeordnet ist. Selbstverständlich kann - wie im weiteren genauer ausgeführt wird, sowohl im Innen- als auch im Außenraum eine andere als die hier (lediglich beispielhaft) dargestellte Anzahl und Art von Fühlern vorgesehen sein, wobei in speziellen Ausgestaltungen insbesondere auf Außenraum-Fühler auch völlig verzichtet werden kann.

Die Fühler sind signalmäßig mit Steuereinheiten 7a bis 7d verbunden, die je eine Verarbeitungseinheit 71a bis 71d sowie je ein Stellglied 72a bis 72d aufweisen. Jedes Stellglied wird von der zugeordneten Verarbeitungseinheit mit einem (durch einem strichpunktierten Pfeil symbolisierten) Steuersignal Sa bis Sd beaufschlagt und kann auf das jeweils zugeordnete Zu- oder Abluftgerät 3a, 3b, 4a oder 4b eine (durch einen Doppelpfeil symbolisierte) Stellwirkung ausüben.

Mit einer solchen Anordnung kann über die Beeinflussung des Luftvolumenstromes durch jedes der Zu- und Abluftgeräte die den Innenraum durchströmende Luftmenge sowie deren räumliche Verteilung in Abhängigkeit von den mit den Fühlern erfaßten Größen gesteuert werden.

Wie im weiteren noch verdeutlicht wird, können dabei sowohl aktuelle als auch gespeicherte Werte der Größen zugrundegelegt und zusätzlich externe Signale mit berücksichtigt werden.

Das Schema nach Fig. 3 ist dabei als Prinzipdarstellung zu verstehen, von der vielfältige Modifikationen möglich sind:

Die Fühler können den Steuereinheiten auf andere Weise zugeordnet sein, es können auch ungesteuerte Ab- und/oder Zuluftgeräte ins System einbezogen sein, mehreren Zu- oder Abluftgeräten kann eine Verarbeitungseinheit zugeordnet sein usw..

Fig. 3 zeigt das Prinzipschaltbild der Steuerung des erfindungsgemäßen Zuluftgerätes in einer Ausführungsform.

Diese Steuerung wird beeinflußt durch eine Anzahl von Signalen, welche von Steuerelementen bzw. Sensoren abgegeben werden, die einer Steuereinheit 1.0 des Zuluftgerätes zugeordnet sind. Von der Steuereinheit 2.0 angesteuert wird eine den Öffnungsquerschnitt des Zuluftgerätes bestimmende Klappe 2.1, die in Abhängigkeit vom Stromfluß durch einen als Stellglied wirkenden Elektromagneten 2.11 (oder alternativ durch eine Heinzwendel, die einen Bimtellstreifen erwärmt) in unterschiedlichen Winkelstellungen im Zuluftkanal stehen kann, so daß der Luftvolumenstrom des Zuluftgerätes dem aktuellen Belüftungsbedarf sowie ggf. weiteren Bedingungen angepaßt werden kann.

Einige der Sensoren bzw. Steuerelemente, die im weiteren genauer cherakterisiert werden, sind mit dem Zuluftgerät räumlich vereinigt, andere von diesem getrennt, und die Belüftungsleistung kann auch durch entfernt gelegene Mittel über einen Bus 3.1 von externen Sensoren oder Steuergliedern bzw. in Abhängigkeit von externen Lüftungs- bzw. Entlüftungselementen beeinflußt werden.

Innerhalb der Steuereinheit 2.0 kommt einer Steuerstufe Temperatur 2.2 eine besondere Bedeutung zu.

Hier werden alle diejenigen Eingangsgrößen zusammengefaßt und verarbeitet, welche den Zuluftdurchsatz im Hinblick auf die anzustrebende energieökonomische Belüftung beeinflussen. Die wesentliche Aufgabe der dargestellten Anordnung besteht in der Zufuhr von Frischluft, diese ist jedoch auf energieökonomische Weise und unter Beachtung der Behaglichkeitsanforderungen der Bewohner zu bewirken.

Die grundsätzlich dieser Aufgabe dienenden Verarbeitungsoperationen übernimmt eine Steuerstufe Frischluftbedarf 2.3.

Der Steuerstufe Temperatur 2.2 werden von zwei Temperaturfühlern, einem Innenfühler 2.41 und einem Außenfühler 2.42, aktuelle Meßwerte der Lufttemperatur im Innen-bzw. im Außenraum übermittelt. Die Meßwerte des Innenfühlers 2.41 und des Außenfühlers 2.42 werden in einer Verarbeitungsstufe 2.43 subtrahiert, d.h. zu einem Temperaturdifferenzsignal zusammenfaßt, und einem nachfolgenden ODER-Gatter 2.44 zugeführt.

Eine Abwandlung des Grundaufbaus der Temperatursteuerung stellt im dargestellten Beispiel eine Temperaturänderungs-Steuerstufe 2.21 zur Feststellung des Einflusses der Belüftung auf die Änderung der Raumtemperatur und zur Steuerung des Zuluftgerätes in Abhängigkeit vom Ergebnis dieser Feststellung dar, die anstelle des Außentemperaturfühlers 2.42 und der Subtraktionsstufe 2.43 mit der Steuerstufe Temperatur 2.2 verbunden sein kann.

Die Temperaturänderungs-Steuerstufe 2.21 weist einen mit dem Ausgang des Innenfühlers 2.41 verbundenen Meßwertspeicher 2.211 zur Zwischenspeicherung von Meßwerten der Innenraumtemperatur und eine Vergleicherstufe 2.212 auf, deren einer Eingang mit dem Meßwertspeicher 2.211, deren anderer Eingang mit dem Ausgang des Innenfühlers 2.41 und deren Ausgang (über zwischengeschaltete weitere Baugruppen) mit der Ansteuerschaltung 2.11 verbunden ist.

Der Steuerstufe 2.21 ist ein Zeitgeber 2.22 zugeordnet, der Steuersignale an Steuereingänge ihrer Funktionselemente sowie über ein UND-Gatter 2.23 an die Ansteuerschaltung 2.11 abgibt. Der zweite Eingang des UND-Gatters 2.23 ist mit dem Innenfühler 2.41 und sein Ausgang (wiederum mittelbar) mit der Ansteuerschaltung 2.11 verbunden.

Gesteuert durch den Zeitgeber 2.22, wird - etwa bei Vorliegen eines Signals vom Innenfühler 2.51, das einen bestehenden Entlüftungsbedarf aufgrund zu hoher CO₂-Konzentration der Raumluft signalisiert - die Luftklappe zunächst für eine vorgegebene kurze Zeitspanne geöffnet und gleichzeitig der aktuelle Meßwert der Innnentemperatur vor Öffnung der Luftklappe im Meßwertspeicher 2.211 festgehalten.

Nach Ablauf der vorgegebenen Zeitspanne werden der gespeicherte und der aktuelle Temperaturwert der Vergleicherstufe 2.211 zugeführt. Durch den Vergleich der durch den Meßfühler 2.41 zu Beginn und nach Ablauf der vorgegebenen Zeitspanne gemessenen Werte der Temperatur wird der Einfluß der Belüftung auf die Raumtemperatur ermittelt, wobei durch ein zusätzliches Differenzierglied noch die Geschwindigkeit des Temperaturabfalls (oder -anstiegs) bestimmt werden kann.

Im Ergebnis des Vergleichs bzw. der Ermittlung des Anstiegs der Temperatur-Zeit-Kurve wird ein Steuersignal an die Ansteuerschaltung 2.11 abgegeben, das dazu dient, die Luftklappe 2.1 in eine hinsichtlich Belüftungsbedarf und Energiehaushalt optimierte (insbes. eine übermäßige Auskühlung des Raumes bei niedriger Außentemperatur vermeidende) Stellung zu bringen.

Zur Vorgabe dieser optimalen Stellung ist ein Rückgriff auf in einem (nicht gezeigten) Programmspeicher gespeicherte Betriebsprogramme in Abhängigkeit vom Vergleichs- bzw. Berechnungsergebnis zweckmäßig. Der Programmspeicher ist dabei so aufgebaut, daß für eine Mehrzahl von Vergleichs- bzw. Berechnungsergebnissen jeweils ein(e) die zugehörige optimale Klappenstellung vorgebende(s) Steuersignal(folge) vorgespeichert ist, das/die durch Adressierung des entsprechenden Speicherplatzes einfach abgerufen wird.

Der Steuerstufe Frischluftbedarf 2.3 werden von einem CO₂-Sensor 2.51 und einer Verarbeitungsstufe Raumnutzung 2.52 Eingangssignale zugeführt. Die Verarbeitungsstufe Raumnutzung 2.52 erhält ihrerseits wiederum Eingangssignale von einer Erfassungsstufe Personenanwesenheit 2.61, welche den Aufenthalt von Personen ermittelt, sowie einem Zeitgeber 2.62 und einer Einheit zur Ermittlung periodischen Verhaltens 2.63.

Durch eine zusätzliche (in Fig. 3 der besseren Übersichtlichkeit wegen nicht dargestellte) Verbindung zwischen dem Ausgang der Verarbeitungsstufe Raumnutzung 2.52 und einem Eingang der ODER-Stufe 2.44 wird dafür gesorgt, daß die Anwesenheit von Personen, die für die Einstellung der Raumtemperatur von Bedeutung ist, von vornherein in die Ermittlung des Temperatursteuerregimes einbezogen werden kann, wobei der individuell gewünschte Einfluß der Anwesenheit von Personen im zu belüftenden Innenraum auf das Temperatusteuerregime durch eine vorgegebene Wichtung des übermittelten Signals beeinflußbar ist.

Schließlich ist eine Erfassungsstufe Luftzufuhrbedarf 2.71 vorgesehen, welche ausschließlich über den Bus 3.1 mit externen (nicht dargestellten) Eingabeeinrichtungen in Verbindung steht. Die Stufe 2.71 veranlaßt im durch entsprechende Eingangssignale aktivierten Zustand über die Ausgabe eines (externen) Steuersignals "Luftzufuhrbedarf" an die Ansteuerschaltung 2.11 eine Veränderung der effektiven Größe der Luftdurchlaßöffnung durch Ansteuerung der Klappe 2.1 - etwa wenn durch Einschaltung von Abluftgeräten eine Luftabführung erfolgt, die bei geschlossenem oder mit niedrigem Luftdurchsatz arbeitendem Zuluftgerät zu einem Unterdruck im Innnenraum und damit verringerter Entlüftungsleistung des Abluftgerätes führen würde.

Um die Prinzipdarstellung in Fig. 3 übersichtlich zu halten, ist über den entsprechenden Baugruppen jeweils durch eine vertikal nach unten zeigende Pfeilspitze angedeutet, daß diese Einheit durch externe Steuerungsmittel bzw. die Anlagenkonfiguration in oder außer Betrieb gesetzt sein kann. Bei spezielleren Ausführungsformen bzw. Anwendungsfällen kann die jeweilige Baugruppe auch ganz entfallen (was einer Inaktivierung entspricht), wobei die Signalverarbeitung dann ausschließlich durch die verbleibenden Signalgruppen erfolgt, was deshalb möglich ist, weil die Ausgangssignale der betreffenden Signalgruppen (wie weiter unten näher dargestellt ist) sich nach Art von ODER-Stufen logisch verknüpfen, so daß das Ausgangssignal jeder Baugruppe lediglich einen zusätzlichen Anlaß zur Aktivierung des Entlüftermotors liefert.

Die dargestellten ODER-Glieder arbeiten vorzugsweise derart, daß die Eingangssignale analog aufsummiert werden, wobei sie so eingestellt sein könne, daß ein (hinreichend großes) Eingangssignal allein die Ausgabe eines Ausgangssignals bewirken kann. Insofern können die betreffenden ODER-Glieder auch als Additions-Glieder mit Begrenzung aufgefaßt werden.
Die technische Realisierung kann rein digital erfolgen, wobei die teilweise analoge Beeinflussung der weiterzuverarbeitenden Signale etwa durch eine Pulsbreitensteuerung und nachfolgende Integration erzeugt werden kann.

Des weiteren deuten Pfeilspitzen, die seitlich in die jeweilige Baugruppe hinein zeigen, an, daß über den Bus 3.1 zusätzliche Signale, welche die betreffende Baugruppe mit beeinflussen, zugeführt werden können, um auf diese Weise in der betreffenden Verarbeitungsebene bei der Erzeugung des Motorsteuersignals mitzuwirken. Aus den Baugruppen heraus zeigende Pfeilspitzen deuten an, daß umgekehrt von diesen Baugruppen auch Signale auf den Bus 3.1 gelangen können, um externen Baugruppen zur Verarbeitung zugeführt zu werden.

Die Signalübertragung zwischen dem Bus 3.1 und den erwähnten Baugruppen übernimmt eine Schnittstelle 3.2.

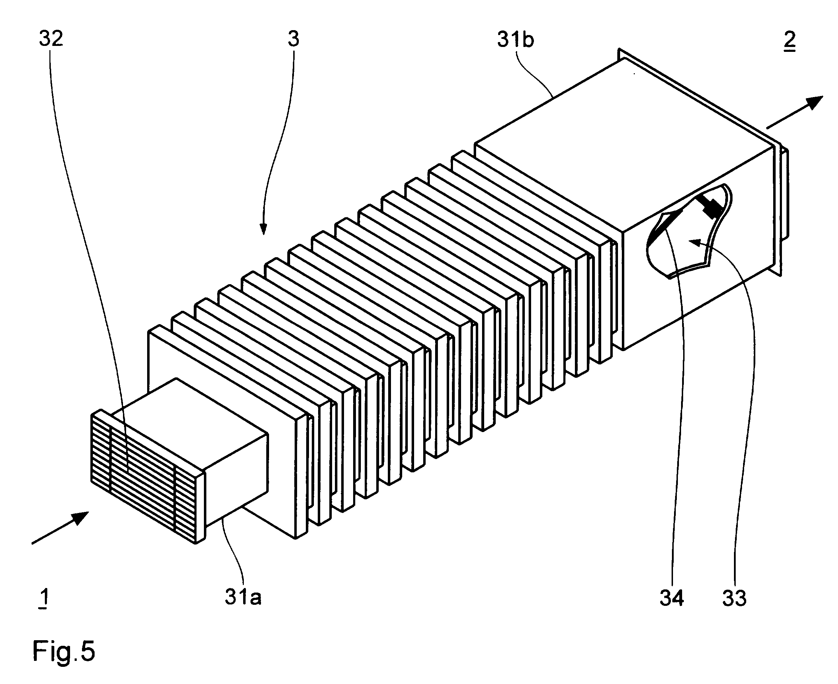

Die "Einfädelung" der Signale auf den Bus erfolgt dabei nach einem vorgegebenen Zeitprogramm, für das in Fig. 5 schematisch ein Beispiel gezeigt ist, so daß für jede der Baugruppen ein Signalfenster auf der Zeitleiste zur Verfügung steht.

Auf diese Weise kann eine Signalverknüpfung auf unterschiedlichen Verarbeitungsebenen erfolgen, so daß alle Signale zwischen unterschiedlichen Baugruppen des Lüftungssystems entsprechend ihrer hierarchischen Ordnung zusammengefaßt und ausgewertet werden können. Sensorsignale können als Eingangssignale verarbeitet werden, die Ergebnisse von Zwischenverarbeitungsschritten werden auf dieser Ebene ausgetauscht, während Signale der höchsten Verarbeitungsebene, welche unmittelbar die Notwendigkeit des Lufttransportes signalisieren, ebenfalls getrennt verarbeitet werden können. Auf diese Weise ist es möglich, örtlich verteilte Baugruppen mit minimalem Signalübertragungsaufwand zeitlich zu synchronisieren, wobei gleichzeitig auch eine hohe Flexibilität bei der Zusammenschaltung unterschiedlicher Geräte möglich ist. Darüberhinaus sind die Geräte auch funktionsfähig, wenn keine Signalübertragung stattfindet bzw. wenn sie selbständig arbeiten müssen.

Neben den bisher erwähnten Baugruppen ist noch eine Anzahl von weiteren Funktionseinheiten vorgesehen, welche für die Signalverknüpfung der vorgenannten Baugruppen vorgesehen sind und nachfolgend näher beschrieben werden sollen.

Die Erfassungsstufe Personenanwesenheit 2.61 bezieht ihre Eingangssignale von Sensoren, welche auf die Anwesenheit von Personen im zu belüftenden Raum (oder ggf. auch einem anderen Raum der Wohnung) ansprechen.

Dazu gehören beim erläuterten Beispiel ein Schallempfänger 2.611, ein Bewegungsmelder 2.612 und ein Lichtschalter 2.613, welche bei Aktivierung in gegenseitiger ODER-Verknüpfung ein Signal an die Erfassungsstufe Personenanwesenheit 2.61 weiterleiten. Deren Ausgang ist (im Beispiel über ein nachfolgend erklärtes ODER-Glied 2.64, dessen anderer Eingang mit einem Zeitgeber 2.62 verbunden ist) mit dem Eingang der Schaltstufe Raumnutzung 2.52 verbunden und beaufschlagt diese bei jeder Aktivierung für eine vorgegebene Zeitdauer mit einem Eingangssignal, welches die Anwesenheit von Personen und damit den entsprechenden Frischluftbedarf an die nachfolgenden Stufen signalisiert.

Eine optionale weitere Ausgestaltung der Steuerung des Zuluftgerätes aufgrund der Benutzungssituation der zu entlüftenden Räume besteht in folgendem:

Aus einem Uhrzeitsignal (Ausgangssignal der Stufe 2.62, die als funkwellensynchronisierte Uhr - Funkuhr - ausgebildet ist) und dem Anwesenheitssignal von der Stufe 2.61 wird in einer Erfassungsstufe Benutzergewohnheit 2.63 von der Art eines phasengeregelten Kreises ein periodisches Signal gebildet, welches durch die Anwesenheit von Personen synchronisiert wird und im Tages zyklus ein Ausgangssignal entsprechend der üblichen Anwesenheit der Personen auch dann abgibt, wenn die Stufe 2.61 aktuell kein die Anwesenheit von Personen anzeigendes Signal ausgibt. Damit läßt sich, wenn die Steuersignalbeaufschlagung der Ansteuerschaltung 2.11 mit einer Phasenvoreilung erfolgt, gewissermaßen ein "vorsorglicher" Luftaustausch herbeiführen, der im Falle zyklischer Anwesenheit von Personen im zu be- und entlüftenden Raum für Frischluft bereits vor Eintreffen der Personen sorgt.

Eine ähnliche Wirkung läßt sich - allerdings ohne die Möglichkeit einer selbsttätigen Adaptierung an sich ändernde Benutzergewohnheiten - auch durch die Eingabe von Uhrzeiten, zu denen im Raum üblicherweise Personen anwesend sind, über eine Eingabeeinheit 2.621 der Steuerstufe 2.62 und Abspeicherung in einem Benutzergewohnheitsspeicher 2.622 erreichen.

Der Schaltstufe "Raumnutzung" 2.52 nachgeschaltet ist ein ODER-Glied 2.53, das das Ausgangssignal der Stufe 2.52 mit dem des CO₂-Sensors 2.51 für die Luftqualität verknüpft und mit dem aus der Verknüpfung gewonnenen Signal die Steuerstufe Frischluftbedarf 1.3 speist. So wird bewirkt, daß das Zuluftgerät in Abhängigkeit von der Frequentierung des zu be- und entlüftenden Raumes oder aber der Erreichung eines Grenzwertes der CO₂-Konzentration als Maß für die Luftqualität eingeschaltet bzw. mit erhöhter Drehzahl und damit erhöhtem Luftdurchsatz betrieben wird.

Das Ausgangssignal dieser Stufe wird wiederum über ein weiteres ODER-Glied 2.81 mit dem Ausgangssignal der Steuerstufe Temperatur 1.2 zusammengeführt und dient als Eingangssignal der Ansteuerschaltung 2.11 für den Elektromagneten 2.1.

Eine Bedienungsbaugruppe 2.9 ermöglicht die manuelle Eingabe von Steuersignalen, Betriebsparametern etc. für die verschiedenen Baugruppen. Dabei werden die Eingangssignale, welche durch vertikal nach unter gerichtete Pfeile repräsentiert sind und beispielsweise auch von externen Stufen über den Bus 3.1 erscheinen können, unmittelbar eingegeben. Diese Eingabe kann entweder zu Testzwecken oder auch während des Betriebs erfolgen. Die Eingabeeinheit 2.621 kann in die Bedienungsbaugruppe 2.9 integriert sein.

Über die Bedienungsbaugruppe 2.9 können auch ferngelegene Abluftgeräte oder andere Funktionselemente eines Be- und Entlüftungssystems gesteuert werden.

Hierzu bedarf es lediglich einer Zuordnung von Zeitfenstern (und Unterzeitfenstern) auf dem gemeinsamen Steuerbus für die angeschlossenen Einheiten und ihrer einzelnen Baugruppen sowie einer entsprechenden Zeitcodierung der auszugebenden Steuersignale. Durch Auswahl der Zeitfenster mittels einer geeigneten Programmierung der Steuerschalter oder signalabgebenden Funktionen lassen sich über die Zeitfenster zeitlich sequentielle Signalverknüpfungen schaffen, welche in ihrer Funktion einer Schalt- und Steuermatrix entsprechen, bei der nach Art von Zeilen geführte Leitungen mit nach Art von Spalten geführten Leitungen durch wahlweise Verbindung in den Kreuzungspunkten einander zuordenbar sind.

Auf diese Weise sind die Baugruppen generell gleichwertig und die Signale entsprechend den Gegebenheiten und der technischen Weiterentwicklung programmiert verknüpfbar.

Die Baugruppen sind universell verwendbar und es können bei späterem Bedarf auch weitere Baugruppen ohne weiteres nachgerüstet werden.

Über eine Signalleitung von der Ansteuerschaltung 2.11 wird eine die Einschaltung des Elektromagneten 2.1 (oder dessen Beaufschlagung mit einer bestimmten Stromstärke) anzeigendes Signal auf den Bus 3.1 übertragen. Dieses Signal kann von einem angeschlossenen Abluftgerät empfangen und als Signal für die erforderliche Abführung von Abluft gewertet werden, so daß insoweit eine abluftseitige Verbindung zum Außenraum hergestellt wird.

Damit können auch mehrere Abluftgeräte mit einem Zuluftgerät betrieben werden. Ein Signal "Luftabfuhrbedarf" des Zuluftgerätes entspricht prinzipiell einem Signal "Luftzufuhrbedarf" eines Abluftgerätes, wodurch jeweils im Funktionszusammenhang mit einer (oder mehreren) komplementären Einheit(en) den Luftaustausch zwischen Innen- und Außenraum ermöglicht wird. Dabei ist es von Vorteil, wenn eine Einheit aktiv ist. Dies wird/werden im Normalfall das/die Abluftgerät(e) sein, weil sich durch aktive Entlüftung der Luftaustausch unter Vermeidung von Luftüberdruck im Innenraum leichter und mit geringerem technischen Aufwand steuern läßt.

Aktive Zuluftgeräte (etwa Axial- oder Radiallüfter) sind aber ebenso einsetzbar, wobei dann an die Stelle des als Stellglied oben beispielhaft genannten Elektromagneten zur Betätigung der Luftsteuerklappe des passiven Gerätes insbesondere eine Drehzahlstellung für den Lüftermotor treten kann.

Mit einem eine Wohnung umfassenden Be- und Entlüftungssystem, wie es in Fig. 2 schematisch dargestellt ist, kann unter Einsatz des erfindungsgemäßen Zuluftgerätes ein Luftaustausch zum Zwecke der Lufterneuerung und/oder zum Zwecke der Entfeuchtung genau dann erfolgen, wenn ein solcher aufgrund der Benutzungssituation der einzelnen Bereiche der Wohnung erforderlich ist.

Der Tatsache, daß die menschlichen Lebensgewohnheiten im Ablauf eines Tages oder auch einer Woche zu einer zyklischen Frequentierung der einzelnen Bereiche einer Wohnung und dort jeweils zu spezifischen Anforderungen an die Be- und Entlüftung führen, kann dabei durch eine geeignet koordinierte Gesamt-Steuerung Rechnung getragen werden.

So kann der zu den üblichen Zeiten der morgendlichen und abendlichen Körperpflege bestehende hohe Entfeuchtungsbedarf im Bad ebenso wie der in den üblichen Zeiträumen der Essenszubereitung bestehende erhöhte Entlüftungsbedarf in der Küche durch Betrieb des dem jeweiligen Raum zugeordneten Abluftgerätes zu den entsprechenden Zeitpunkten mit hoher Leistung unter Vorrangsteuerung durch eine Steuerstufe Entfeuchtung eines in Bad bzw. Küche angeordneten Abluftgerätes gezielt gedeckt werden.

Dem ausgeprägten Bedürfnis der Bewohner nach Vermeidung von Geräuschen in den Nachtstunden, insbesondere in den Schlafräumen, in denen gleichwohl die Frischluftzufuhr gewährleistet sein muß, kann etwa durch Betrieb eines aktiven Abluftgerätes im akustisch, jedoch nicht lufttechnisch vom Schlafraum getrennten Bad unter Vorrangssteuerung durch die Steuerstufe Frischluftzufuhr 2.3 mit einem im Schlafraum angeordneten CO₂-Sensor 2.51 Rechnung getragen werden. Ein passives (und somit geräuschloses) Zuluftgerät im Schlafraum wird dabei zwangsweise mit aktiviert und damit die Frischluftzufuhr gesichert, ohne daß die Nachtruhe der Bewohner gestört wird.

Aus der vorangehenden Erklärung ist ersichtlich, daß die Komplexität der in Fig. 3 dargestellten Steuerung in der praktischen Anwendung durch Fortlassen einzelner Baugruppen wesentlich verringert werden kann.

Anhand des Ausführungsbeispiels wird lediglich veranschaulicht, daß sich alle dargestellten Baugruppen in ihrem Signalverhalten überlagern lassen, so daß sich eine hohe Flexibilität bei der Auslegung und Ausgestaltung einer konkreten Steuerung ergibt.

Eine insoweit interessante Möglichkeit läßt sich beispielsweise auch bei gänzlichem Fortfall des Signalübertragungsbus erreichen.

Durch den Lufttransport vom Zuluftgerät zum Abluftgerät gelangt etwa bei "testweisem" Betrieb des Abluftgerätes in Intervallen - der zum Zwecke einer regelmäßigen Luftzufuhr zu einem diesem Gerät zugeordneten Feuchtesensor zweckmäßig sein kann - auch dann, wenn die Funktionsräume nicht benutzt werden und ein Anstieg der Luftfeuchtigkeit nur durch die Abgabe von Wasserdampf durch Personen oder Pflanzen in den Aufenthaltsräumen bewirkt wird, feuchte Luft zu dem Feuchtefühler des Abluftgerätes, und durch Zuluftgeräte in den Aufenthaltsräumen strömt Frischluft nach. Bei genügend langem Intervallbetrieb eines Abluftgerätes in der "Testphase" wird nach anfänglichem Ansteigen der Feuchte auch in dem mit dem Abluftgerät ausgestatteten Raum dort die Feuchte bei fortgesetztem effektivem Betrieb des Entlüfters in dem Maße wieder abnehmen, wie (trockenere) Frischluft durch das Zuluftgerät nachströmt, bis sie den einzuhaltenden Normalwert in diesem Raum wieder erreicht hat und eine Steuerstufe Entfeuchtung das Abluftgerät ab- oder in Grundlastbetrieb schaltet.

So ist - unter Führung eines oder ggf. mehrerer einzelner Geräte - eine effektive feuchtegesteuerte Be- und Entlüftung einer Wohnung auch möglich, wenn die Geräte nicht durch einen Bus miteinander verbunden sind.

Allerdings wird das Zusammenwirken der Geräte durch eine Bus-Verknüpfung verbessert und ihr Ansprechen beschleunigt.

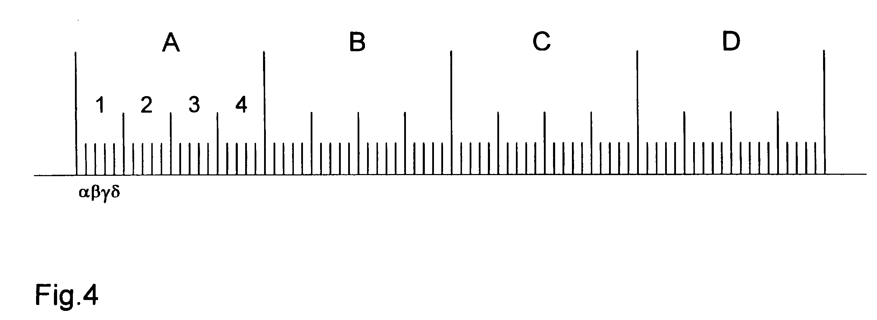

Bei der Festlegung der Zahl der - entsprechend dem Schema nach Fig. 4 - vorzusehenden Zeitfenster ist die höchstzulässige Anzahl der anzuschließenden Einheiten zu berücksichtigen.

Als Übertragungskanal im Sinne eines derartigen Signalbus ist ein dem Lichtnetz aufgeprägter FM-Kanal oder auch ein sogenannter Haus-Bus geeignet, der zusätzlich weitere Signale der Haustechnik überträgt. Dabei kann eine Zusammenfassung von Signalen bzw. ein Signalaustausch mit weiteren haustechnischen Geräten erfolgen. So lassen sich beispielsweise die Signale der oben erwähnten Sensoren für die Anwesenheit von Personen in vorteilhafter Weise auch für Einbruchmeldeanlagen oder zur Steuerung von Beleuchtungs- und/oder Heizgeräten nutzen oder umgekehrt die Bewegungssensoren von Sicherungsanlagen gleichzeitig für die Steuerung der Be- und Entlüftung. Alternativ zu einem Signalbus können die Geräte auch durch eine drahtlose Übertragungsstrecke - etwa auf Ultraschall- oder Infrarotbasis - miteinander und ggf. mit weiteren Geräten bzw. Baugruppen der Haustechnik signalmäßig verknüpft sein.

Anstelle der oder zusätzlich zu den im Beispiel genannten Sensoren können der Steuerung andere Sensoren, die die thermische Behaglichkeit und/oder Luftqualität im Innenraum kennzeichnende Größen erfassen, etwa ein oder mehrere Fühler für die Luftgeschwindigkeit im Innen- und/oder Außenraum, spezielle Sensoren für schädliche Bestandteile der Raumluft - etwa ein CO-Sensor, ein Formaldehydsensor o.ä. - zugeordnet sein.

In Fig. 5 ist der Aufbau einer Ausführungsform des erfindungsgemäßen Zuluftgerätes - eines Zuluftmauerkastens 3 - in einer teilweise geschnittenen perspektivischen Gesamtansicht dargestellt.

Das Gehäuse des Zuluftmauerkastens besteht aus zwei (zum Ausgleich verschiedener mauerstärken) teleskopisch ineinander einschiebbaren Gehäuseteile 31a und 31b. Der dem Außenraum 1 zugewandte Gehäuseteil 31a weist an seiner anströmseitigen, dem Außenraum 1 zugewandten Stirnfläche eine lamellenförmige Abdeckung 32 auf, die (nicht gezeigte) abströmseitige, dem Innenraum 2 zugewandte Stirnfläche des Gehäuseteiles 31b ist ähnlich ausgebildet. Im Inneren der beiden Gehäuseteile ist ein Luftströmkanal 33 gebildet, der den Außenraum 1 mit dem Innenraum 2 verbindet und in dem sich schwenkbar eine - in Fig. 5 nur schematisch angedeutete - Luftklappe 34 zur Veränderung und ggf. zum Verschließen des wirksamen Kanalquerschnitts befindet.

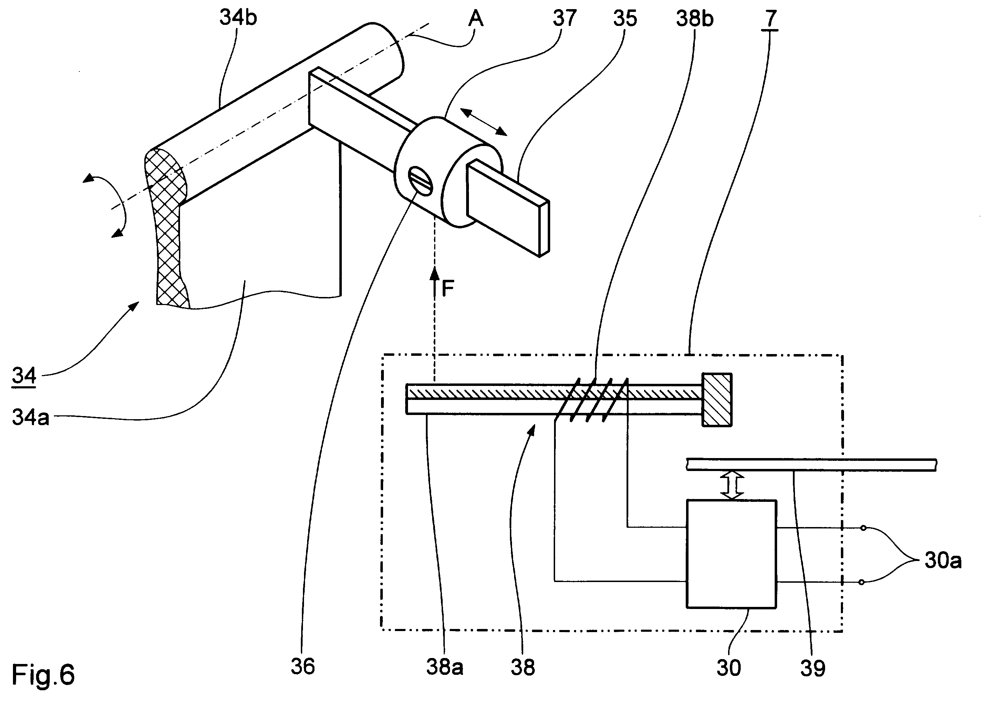

In Fig. 6 ist ein Abschnitt der Luftklappe 34 zur Verdeutlichung des mechanischen Aufbaus genauer gezeigt und die zugehörige Steuerung schematisch skizziert.

Die Luftklappe 34 weist einen in seinen Abmessungen den Kanalabmessungen angepaßten ebenen Abschnitt 34a und einen angeformten zylindrischen, seitlich über den Abschnitt 34a hervorstehenden Abschnitt 34b auf, der zur Verstärkung und um eine Drehachse A drehbaren Lagerung der Klappe im Gehäuseteil 31b dient. Am Abschnitt 34b ist eine auf der Ebene des Abschnitts 34a senkrecht stehende, zur Abströmseite hin weisende Profilstange 35 angebracht, auf der in Längsrichtung verschiebbar und in einer vorgegebenen Stellung mittels einer Feststellschraube 36 arretierbar ein Gewicht 37 ruht.

Die Luftklappe ist mit diesem Aufbau frei schwenkbar in seitlichen Ausarbeitungen des Gehäuseteils 31b aufhängbar und stellt sich bei Druckausgleich zwischen Lee- und Luvseite in einer Winkelstellung zur Knallängsachse ein, die durch die Massen- und Hebelverhältnisse des ebenen Abschnitts 34a und der Stange 35 mit dem Gewicht 37 bestimmt ist. Die Winkelstellung bei Druckausgleich ist somit durch Verschieben des Gewichts 37 auf der Stange 35 vorgebbar. Bei Beaufschlagung mit anströmseitigem Druck neigt die Klappe 34 dazu, sich senkrecht zum Luftstrom zu stellen, wobei die letzlich eingenommene Stellung vom anströmseitigen Druck bestimmt wird und die Klappe 34 bei hohem Druck (starkem Wind) im Außenraum 1 den Kanal 33 schließt und damit eine Frischluftzufuhr in den Innenraum 2 unterbindet.

Auf diese Weise wird eine Luftvolumenstromregelung und eine Zwangssschließung in Abhängigkeit vom Winddruck im Außenraum realisiert.

Der Luftklappe 34 zugeordnet ist eine Steuereinheit 7, die entsprechend der in Fig. 4 dargestellten und weiter oben genauer beschriebenen Steuereinheit 2.0 unter Einschluß der zugehörigen peripheren Baugruppen oder einer abgewandelten Ausführungsform dieser aufgebaut ist.

In der in Fig. 6 skizzierten Ausführung weist sie eine Mikroprozessor-Steuerbaugruppe 30 sowie als Stellglied eine Bimetall-Anordnung 38 auf, die einen Bimetallstreifen 38a und eine von der Steuerbaugruppe 30 mit Strom beaufschlagte Heizwicklung 38b umfaßt. Das Steuersignal ist bei dieser Anordnung ein vorgegebener Stromfluß durch die Heizwicklung 38b, aufgrund dessen sich der Bimetallstreifen verformt und eine Stellkraft F auf die Stange 35 ausübt, die zu einer Veränderung der Winkelstellung der Klappe 34 im Kanal 33 und damit zu einer Veränderung des wirksamen Kanalquerschnitts führt.

Die zum Betrieb des in der Steuerbaugruppe 30 enthaltenen Mikroprozessors und weiterer Halbleiterschaltungselemente notwendige Betriebsspannung kann durch bekannte, hier nicht genauer zu beschreibende Funktionseinheiten bereitgestellt werden, in vorteilhafter Weise etwa auch durch ein kleines Solarzellenarray am Gehäuse 31.

Eingangssignale erhält die Steuerbaugruppe 30 direkt von an einem entsprechenden Anschluß 30a angeschlossenen Signalaufnehmern (Fühler) oder über einen Signalbus 39. Der Signalbus 39 entspricht funktional dem oben unter Bezugnahme auf Fig. 4 und 5 erläuterten Signalbus 3.1.

Zur Funktion der Anordnung kann im wesentlichen auf die Erläuterungen zu Fign. 2 und 3 Bezug genommen werden. Die spezielle Ausführung zeichnet sich dadurch aus, daß eine der Anwesenheit und den Behaglichkeits- oder Luftqualitätsanforderungen von Nutzern des Innenraumes gerecht werdende Steuerung der Frischluftzufuhr gleichzeitig in Abhängigkeit vom äußeren Winddruck und einer im Innenraum gemessenen oder von extern übermittelten Steuergröße möglich ist.

Im Zusammenwirken dieses Zuluftmauerkastens mit weiteren Zu- und/oder Abluftgeräten ist eine Steuerung der Luftverteilung in einer Wohnung zu realisieren. Insbesondere läßt sich im Zusammenhang mit dem aus bauphysikalischen und meßtechnischen Gründen wünschenwerten permanenten Betrieb eines aktiven Abluftgerätes mit einer Fördermenge von etwa 20 bis 40 m³/h das erforderliche Zuluftvolumen wahlweise über unterschiedliche Zuluftgeräte einzeln oder in kombiniertem Betrieb zuführen. Die Bereitstellung der Zuluft kann dabei etwa primär unter Beachtung höchster Energieökonomie (weitestgehend über Räume mit niedriger Raumtemperatur), der Benutzerbedürfnisse (etwa Zugluftfreiheit im jeweiligen Aufenthaltsraum) oder anderer Entscheidungskriterien erfolgen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

Gegenüber der in den Fign. 6 und 7 gezeigten Ausführungsform kann insbesondere die äußere Gestalt und die Betätigung des Zuluftgerätes (etwa elektrodynamisch, unter Einsatz von Gedächtnislegierungen oder elektromotorisch) abweichend ausgebildet werden, auch liegt ein aktives Zuluftgerät mit motorbetriebenem Lüfter im Bereich der Erfindung.

Dazu zählt weiter das Vorsehen einer zusätzlichen Handsteuerung, die Realisierung eines zeitlichen Nachlaufes des Lüfters nach einer Umschaltung - insbesondere bei Abschaltung aufgrund von die An- oder Abwesenheit von Personen betreffenden Signalen - oder der Anschluß an eine zentrale Steuerwarte (beispielsweise eines Hotels oder Altenheims), um neben der dezentralen Steuerung wahlweise auch eine zentral gesteuerte Betätigung des Gerätes zu ermöglichen.

Die im Ausführungsbeispiel erwähnten ODER-Glieder können hardware- (als fest verdrahtete logische Gatter) oder softwaremäßig realisiert sein - wesentlich ist die Vornahme einer ODER-Verknüpfung der jeweils zugeführten Signale. Dabei schließt die ODER-Verknüpfung auch die lineare Verknüpfung ein, wobei diese bevorzugt in Form einer stufenweisen Bilanzierung unter Zusammenführung jeweils gleichartiger Größen (Luftvolumen, Personenanwesenheit, Luftgüte, etc.) erfolgt.

Die Erfindung beschränkt sich in ihrer Ausführung nicht auf das vorstehend angegebene bevorzugte Ausführungsbeispiel. Vielmehr ist eine Anzahl von Varianten denkbar, welche von der in den Ansprüchen spezifizierten Lösung auch in anders gearteten Ausführungen Gebrauch macht.

## Patentansprüche

1. Zuluftgeräteanordnung (3; 3a, 3b) zur Belüftung eines Innenraumes (2) aus einem Außenraum (1), insbesondere im Zusammenwirken mit einem aktiven Abluftgerät, wobei das Zuluftgerät eine Steuereinheit (7; 7a, 7b; 2.0) aufweist, der ein auf eine die Atmungsqualität, insbesondere den Sauerstoffanteil, Personenanwesenheit und/oder die thermische Behaglichkeit im Innenraum (2) charakterisierende Größe ansprechender Aufnehmer (5a, 5b; 2.41, 2.51) zur Erfassung der Größe im Innenraum (2) zugeordnet ist und die eine Verarbeitungseinheit (71a, 71b; 2.2) zur Gewinnung eines Steuersignals aus der Meßgröße sowie ein mit dem Steuersignal beaufschlagtes Stellglied (72a, 72b; 2.11; 311) zur Veränderung der das Zuluftgerät passierenden Luftmenge in Abhängigkeit vom Steuersignal aufweist, wobei die Steuereinheit (7; 7a, 7b; 2.0; 30) als Mikroprozessor- bzw. speicherprogrammierbare Steuerung ausgebildet ist,
**dadurch gekennzeichnet**,
daß der Steuereinheit (7; 7a, 7b; 2.0; 30) als Aufnehmer ein Fühler (5b) für die Innenraum-Luftgeschwindigkeit und/oder ein den Winddruck auf die Außenöffnung des Zuluftgerätes (3; 3a, 3b) erfassender zusätzlicher Fühler (34, 35, 37) zugeordnet ist.

2. Zuluftgeräteanordnung nach Anspruch 1, **dadurch gekennzeichnet**, daß ein weiteres für den Zuluftbedarf charakteristisches, von einem externen Gerät, insbesondere von dem Abluftgerät, abgegebenes Steuersignal der Steuereinheit als Eingangssignal zugeführt wird.

3. Zuluftgeräteanordnung nach einem der vorangehenden Ansprüche, **dadurch gekennzeichnet**, daß der Steuereinheit (7; 7a, 7b; 2.0; 30) mindestens ein weiterer Signalaufnehmer (5b, 6; 2.611, 2.612, 2.613) zur selbsttätigen Erfassung einer weiteren, die klimatischen Bedingungen im Außenraum (1), die Luftqualität und/oder die thermische Behaglichkeit im Innenraum (2) charakterisierenden Meßgröße und/oder einer zeitlichen oder durch den/die Benutzer des Innenraumes vorgegebenen Führungsgröße (Geräteeinstellung) zugeordnet ist.

4. Zuluftgeräteanordnung nach einem der vorangehenden Ansprüche, **dadurch gekennzeichnet**, daß die Steuereinheit (7; 7a bis 7d; 2.0; 30) eine logische Verarbeitungseinheit (2.81) aufweist, in der die Gewinnung des Steuersignals aus den mindestens zwei Meß- bzw. Führungsgrößen derart ausgeführt wird, daß bei Überschreitung eines vorgegebenen Wertes einer der Größen ein Steuersignal zu mindestens intervallweisem Betrieb des Zuluftgerätes (4; 4a, 4b) zur Gewährleistung von Frischluftzufuhr ausgegeben wird und das Steuersignal ansonsten anhand vorgegebener Verknüpfungen zwischen den Ist- bzw. Führungsgrößen gewonnen wird.

5. Zuluftgeräteanordnung nach einem der vorangehenden Ansprüche, **dadurch gekennzeichnet**, daß der Aufnehmer (5a, 5b; 2.41, 2.51) ein Innentemperaturfühler zur Erfassung der Innenraum-Lufttemperatur oder der Umschließungsflächentemperatur ist.

6. Zuluftgeräteanordnung nach einem der vorangehenden Ansprüche, **dadurch gekennzeichnet**, daß der Steuereinheit (7; 7a, 7b; 2.0; 30) ein Fühler (5b; 2.51) für die Konzentration eines chemischen Stoffes in der Raumluft, insbesondere ein CO₂-Fühler, zugeordnet ist.

7. Zuluftgeräteanordnung nach einem der vorangehenden Ansprüche, **dadurch gekennzeichnet**, daß der Steuereinheit (7; 7a, 7b; 2.0; 30) als Aufnehmer ein Fühler (5b; 2.611; 2.612) zur Feststellung der Anwesenheit von Personen im Innenraum (2), insbesondere ein Bewegungsmelder (2.611), zugeordnet ist.

8. Zuluftgeräteanordnung nach einem der Ansprüche 5 bis 7, **dadurch gekennzeichnet**, daß der Steuereinheit (7; 7a, 7b; 2.0; 30) ein zweiter Temperaturfühler (6; 2.42) zur Erfassung der Außenlufttemperatur zugeordnet ist und sie ein arithmetisches Verarbeitungsglied (2.43) zur Ermittlung der Temperaturdifferenz zwischen Innen- und Außenraum (2, 1) umfaßt.

9. Zuluftgeräteanordnung nach einem der vorangehenden Ansprüche, **dadurch gekennzeichnet**, daß mindestens einer der Steuereinheit (7; 7a, 7b; 2.0; 30) zugeordneten Signalaufnehmer (5a, 5b, 6; 2.41, 2.42, 2.51, 2.611, 2.612, 2.613) vom Zuluftgerät (3; 3a, 3b) räumlich getrennt angeordnet ist.

10. Zuluftgeräteanordnung nach einem der vorangehenden Ansprüche, **dadurch gekennzeichnet**, daß die Steuereinheit (7; 7a, 7b; 1.0; 40) einen Zeitgeber (1.22, 1.62) zur Bestimmung vorgegebener Betriebszeiten des Zuluftgerätes (3; 3a, 3b) und eine logische Verarbeitungseinheit (2.63) zur Verknüpfung von Signalen des Zeitgebers (2.62) mit Signalen mindestens eines der Aufnehmer (5a, 5b, 6; 2.41, 2.51, 2.611, 2.612, 2.613) derart, daß in Abhängigkeit vom Über- oder Unterschreiten vorgegebener Werte der Meßgrößen und/oder von Geräteeinstellungen oder der Anwesenheit von Personen im Innenraum (2) zu vorgegebenen Zeiten das Steuersignal zum Betrieb des Zuluftgerätes (3; 3a, 3b) mit einem vorgegebenen Luftdurchsatz ausgegeben wird, aufweist.

11. Zuluftgeräteanordnung nach Anspruch 10, **dadurch gekennzeichnet** , daß der Zeitgeber (2.62) eine Echtzeituhr aufweist.

12. Zuluftgeräteanordnung nach einem der vorangehenden Ansprüche, **dadurch gekennzeichnet**, daß die Steuereinheit (7; 7a, 7b; 2.0; 30) eine Zeitgeber- und -erfassungseinrichtung (2.62) sowie einen Benutzergewohnheitsspeicher (2.622) zur Speicherung von Geräteeinstellungen und/oder der Anwesenheit von Personen im Innenraum(2) unter Zuordnung des Zeitpunktes ihres Vorliegens und eine logische Verarbeitungseinheit (2.63, 2.64) zur Verknüpfung der im Benutzergewohnheitsspeicher (2.622) gespeicherten Daten mit Signalen der Zeitgeber- und Erfassungseinrichtung (2.62) und wahlweise in einem Meßwertspeicher (2.212) gespeicherten und/oder aktuellen Werten der Meßgrößen sowie wahlweise in einem Programmspeicher gespeicherten Betriebsprogrammen des Zuluftgerätes (3; 3a, 3b) und zur Ausgabe eines Steuersignals an das Stellglied (72a, 72b; 2.11; 38) im Ergebnis der Verknüpfung aufweist.

13. Zuluftgeräteanordnung nach einem der vorangehenden Ansprüche, **dadurch gekennzeichnet**, daß die Steuereinheit (7; 7a, 7b; 2.0; 30) mindestens eine dem Zuluftgerät (3; 3a, 3b) räumlich eingegliederte und mindestens eine vom Zuluftgerät räumlich entfernt angeordnete Verarbeitungseinheit aufweist, deren Ausgangssignale in einer vorgegebenen Verknüpfung dem Stellglied (72a, 72b, 2.11; 38) zugeführt werden.

14. Zuluftgeräteanordnung nach einem der vorangehenden Ansprüche, **dadurch gekennzeichnet**, daß die Steuereinheit (7; 7a, 7b; 2.0; 30) mindestens eine mit den Ausgängen von mindestens zwei Verarbeitungseinheiten (2.2, 2.3, 2.52) verbundene ODER-Stufe (2.81, 2.53) aufweist, deren Ausgang mit dem Stellglied (2.11) verbunden ist.

15. Zuluftgeräteanordnung nach einem der vorangehenden Ansprüche, **gekennzeichnet durch** eine Schnittstelleneinrichtung (3.2) zur Herstellung einer Signalverbindung über einen das Zuluftgerät (3; 3a, 3b) mit externen Einrichtungen, insbesondere weiteren Zuluft- oder Abluftgeräten (4a, 4b) und/oder Meßfühlern (5a, 5b, 6) verbindenden Signalbus (3.1; 39).

16. Zuluftgeräteanordnung nach einem der vorangehenden Ansprüche, **gekennzeichnet durch** einen Betriebszustandsmelder zur Anzeige des Betriebszustandes des Zuluftgerätes, insbesondere zur Ausgabe eines Betriebszustandssignals auf den Signalbus (3.1; 39).

17. Zuluftgeräteanordnung nach einem der vorangehenden Ansprüche, **gekennzeichnet durch** einen Signalaufnehmer und -wandler (2.71) zur Aufnahme von Betriebszustandssignalen von externen Einrichtungen, insbesondere weiteren Zuluft- oder Abluftgeräten (4a, 4b), und zur Ausgabe eines Steuersignals an das Stellglied (72a, 72b; 2.11; 38) in Abhängigkeit vom aufgenommenen Betriebszustandssignal.

18. Zuluftgeräteanordnung nach einem der vorangehenden Ansprüche, **dadurch gekennzeichnet**, daß eine Schnittstelleneinrichtung (3.2) zur Steuersignalverbindung mit einer externen Steuerwarte vorgesehen ist.

19. Zuluftgeräteanordnung nach einem der vorangehenden Ansprüche, **dadurch gekennzeichnet**, daß die mikroprozessor- bzw. speicherprogrammierbare Steuerung so ausgebildet ist, daß sie die Steuerung eines zeitlichen Nachlaufens des Gerätes, insbesondere für einen vorbestimmten Zeitraum nach Erhalt eines Steuersignals zum Abschalten, bewirkt.

20. Zuluftgeräteanordnung nach einem der vorangehenden Ansprüche, **dadurch gekennzeichnet**, daß die Steuereinheit (7; 7a bis 7d; 2.0; 30)eine Schaltvorrichtung zum Bewirken einer manuellen Steuerung aufweist.

21. Zuluftgeräteanordnung nach einem der vorangehenden Ansprüche, **gekennzeichnet durch** ein eine Luftklappe (34) und eine elektrodynamische, thermoelektrische oder elektromotorische Betätigungsvorrichtung (35, 38) zur Veränderung der Stellung der Luftklappe im Zuluftstrom aufweisendes Stellglied zur Steuerung des Luftvolumenstroms durch das Zuluftgerät (3; 3a, 3b).

## Claims

1. An arrangement of air supply equipment(3; 3a, 3b) for ventilating an interior space (2) from an exterior space (1), especially in co-operation with an active air extraction device, wherein the air supply equipment has a control unit (7; 7a, 7b; 2.0) having an associated sensor (5a, 5b; 2.41, 2.51) which responds to a magnitude characterising the breathing air quality, especially the oxygen content, presence of persons and/or the thermal comfort in the interior space (2) for detecting the magnitude in the interior space (2) and which has a processing unit (71a, 71b; 2.2) to extract a control signal from the measured variable and an actuator (72a, 72b; 2.11; 311) which reacts to the control signal for alteration of the amount of air which passes through the air supply equipment, dependent on the control signal, wherein the control unit (7; 7a, 7b; 2.0; 30) is designed as a microprocessor or stored-program controller, characterised in that the control unit (7; 7a, 7b; 2.0; 30) has as a sensor a detector (5b) for the interior air speed and/or an additional detector (34, 35, 37) to detect the wind pressure on the exterior opening of the air supply equipment (3; 3a, 3b).

2. An arrangement of air supply equipment according to claim 1, characterised in that a further control signal, characteristic of the air supply requirement, emitted by an external device, especially the air extraction device, is transmitted to the control unit as an input signal.

3. An arrangement of air supply equipment according to one of the preceding claims, characterised in that at least one further signal sensor (5b, 6; 2.611, 2.612, 2.613) is assigned to the control unit (7; 7a, 7b; 2.0; 30) for automatic detection of a further measured variable which characterises the climatic conditions in the exterior space (1), the air quality and/or the thermal comfort in the interior space (2) and/or a command variable (equipment setting) which is either time-set or is set by the user of the interior space.

4. An arrangement of air supply equipment according to one of the preceding claims, characterised in that the control unit (7; 7a to 7d; 2.0; 30) has a logical processing unit (2.81) in which the extraction of the control signal from the at least two measured or command variables is carried out in such a way that on exceeding a specified value of one of the variables, a control signal is given for at least intermittent operation of the air supply equipment (4; 4a, 4b) to guarantee the fresh air supply, and the control signal is otherwise extracted by means of specified relationships between the actual and the reference input variables.

5. An arrangement of air supply equipment according to one of the preceding claims, characterised in that the sensor (5a, 5b; 2.41, 2.51) is an internal temperature detector for detecting the internal air temperature or the temperature of the surrounding surfaces.

6. An arrangement of air supply equipment according to one of the preceding claims, characterised in that a detector (5b; 2.51) for the concentration of chemical material in the ambient air, especially a CO₂ detector, is assigned to the control unit (7; 7a, 7b; 2.0; 30).

7. An arrangement of air supply equipment according to one of the preceding claims, characterised in that a detector (5b; 2.611; 2.612), especially a movement sensor (2.611), is assigned to the control unit (7; 7a, 7b; 2.0; 30) as a sensor to determine the presence of persons in the interior space (2).

8. An arrangement of air supply equipment according to one of the preceding claims, characterised in that a second temperature detector (6; 2.42) is assigned to the control unit (7; 7a, 7b; 2.0; 30) for detecting the exterior air temperature and that the control unit comprises an arithmetic processing member (2.43) for determining the temperature difference between the interior and exterior spaces (2, 1).

9. An arrangement of air supply equipment according to one of the preceding claims, characterised in that at least one of the signal sensors (5a, 5b, 6; 2.41,2.42, 2.51, 2.611, 2.612, 2.613) assigned to the control unit (7; 7a, 7b; 2.0; 30) is disposed spatially separate from the air supply equipment (3; 3a, 3b).

10. An arrangement of air supply equipment according to one of the preceding claims, characterised in that the control unit (7; 7a, 7b; 1.0; 40) has a time generator (1.22, 1.62) to specify predetermined operating times of the air supply equipment (3; 3a, 3b) and a logical processing unit (2.63) for linking time generator (2.62) signals with signals from at least one of the sensors (5a, 5b, 6; 2.41, 2.51, 2.611, 2.612, 2.613) in such a way that the control signal for operation of the air supply equipment (3; 3a, 3b) with a specified quantity of air being passed through is given, depending on whether specified values of the measured variables and/or equipment settings have been exceeded or not reached, or depending on the presence of persons in the interior space (2) at specified times.

11. An arrangement of air supply equipment according to claim 10, characterised in that the time generator (2.62) has a real-time clock.

12. An arrangement of air supply equipment according to one of the preceding claims, characterised in that the control unit (7; 7a, 7b; 2.0; 30) has a time generator and detection apparatus (2.62) and a user preference memory (2.622) to store equipment settings and/or the presence of persons in the interior space (2)in association with the time point for this occurrence and a logical processing unit (2.63, 2.64) for correlating the data stored in the user preference memory (2.622) with signals from the time generator and detection apparatus (2.62), and selectively current values of the measured variables and/or values stored in a measured variable memory, and also selectively operating programs for the air supply equipment (3; 3a, 3b) stored in a program memory and for output of a control signal to the actuator (72a, 72b; 2.11; 38) as a result of the correlation.

13. An arrangement of air supply equipment according to one of the preceding claims, characterised in that the control unit (7; 7a, 7b; 2.0; 30) has at least one processing unit which is spatially integrated with the air supply equipment (3; 3a, 3b) and one processing unit which is spatially separate from the air supply equipment, the output signals of which are supplied in a predefined relationship to the actuator (72a, 72b, 2.11; 38).

14. An arrangement of air supply equipment according to one of the preceding claims, characterised in that the control unit (7; 7a, 7b; 2.0; 30) has at least one OR stage (2.81, 2.53), connected with the outputs of at least two processing units (2.2, 2.3, 2.52), the output of which is connected with the actuator (2.11).

15. An arrangement of air supply equipment according to one of the preceding claims, characterised by an interface apparatus (3.2) for the establishment of a signal connection via a signal bus (3.1; 39) connecting the air supply equipment (3; 3a, 3b) with external apparatus, especially further air supply or extraction equipment (4a, 4b) and/or measurement sensors (5a, 5b, 6).

16. An arrangement of air supply equipment according to one of the preceding claims, characterised by an operating status indicator to display the operating status of the air supply equipment, especially for output of an operating status signal via the signal bus (3.1; 39).

17. An arrangement of air supply equipment according to one of the preceding claims, characterised by a signal sensor and converter (2.71) for acceptance of operating status signals from external apparatus, especially further air supply or extraction equipment (4a, 4b) and for output of a control signal to the actuator (72a, 72b; 2.11; 38) in dependence on recorded operating status signals.

18. An arrangement of air supply equipment according to one of the preceding claims, characterised in that an interface apparatus (3.2) is provided for control signal connection to an external control centre.

19. An arrangement of air supply equipment according to one of the preceding claims, characterised in that the microprocessor or programmable controller is designed so that it effects the control of a temporal over-run of the equipment, especially for a specified period of time after receipt of a control signal to shut down.

20. An arrangement of air supply equipment according to one of the preceding claims, characterised in that the control unit (7; 7a to 7d; 2.0; 30) has a switching assembly to effect manual control.

21. An arrangement of air supply equipment according to one of the preceding claims, characterised by an actuator, having an air flap (34) and an electrodynamic, thermoelectrical or electromotor operating apparatus (35, 38) for alteration of the setting of the air flap in the air supply stream, for controlling the air volume flow through the air supply equipment (3; 3a, 3b).

## Revendications

1. Agencement d'amenée d'air (3 ; 3a, 3b) pour l'aération d'une pièce intérieure (2) à partir d'un espace extérieur (1), en particulier en coopération avec un appareil actif d'évacuation d'air, l'agencement d'amenée d'air comportant une unité de commande (7 ; 7a, 7b ; 2.0) à laquelle sont associés des capteurs (5a, 5b ; 2.41, 2.51) réagissant à une valeur caractérisant la qualité respiratoire, en particulier la proportion d'oxygène, la présence de personnes et/ou le confort thermique dans la pièce intérieure (2), pour la détection de la valeur dans la chambre intérieure (2), et qui comporte une unité de traitement (71a, 71b; 2.2) pour l'obtention d'un signal de commande à partir de la valeur mesurée ainsi qu'un organe de réglage (72a, 72b ; 2.11 ; 311) attaqué par le signal de commande pour la modification de la quantité d'air passant par l'agencement d'amenée d'air en fonction du signal de commande, l'unité de commande (7 ; 7a, 7b ; 2.0 ; 30) étant réalisée sous forme d'une commande à microprocesseur ou à programme mémorisé, caractérisé en ce qu'il est associé à l'unité de commande (7 ; 7a, 7b ; 2.0 ; 30) un palpeur (5b) en tant que capteur pour la vitesse d'air de la pièce intérieure et/ou un palpeur supplémentaire (34, 35, 37) détectant la pression du vent sur l'ouverture extérieure de l'agencement d'amenée d'air (3 ; 3a, 3b).

2. Agencement d'amenée d'air selon la revendication 1, caractérisé en ce qu'un autre signal de commande caractérisant le besoin d'amenée d'air et émis par un appareil externe, en particulier par l'appareil d'évacuation d'air, est envoyé à l'unité de commande en tant que signal d'entrée.

3. Agencement d'amenée d'air selon l'une quelconque des revendications précédentes, caractérisé en ce qu'il est associé à l'unité de commande (7 ; 7a, 7b ; 2.0 ; 30) au moins un autre capteur de signal (5b, 6 ; 2.611, 2.612, 2.613) pour la détection automatique d'une grandeur de mesure caractérisant les conditions climatiques dans l'espace extérieur (1), la qualité d'air et/ou le confort thermique dans la pièce intérieure (2), et/ou d'une grandeur pilote (réglage d'appareil) temporelle ou prédéterminée par le/les utilisateur(s) de la pièce intérieure.

4. Agencement d'amenée d'air selon l'une quelconque des revendications précédentes, caractérisé en ce que l'unité de commande (7 ; 7a à 7d ; 2.0 ; 30) comprend une unité de traitement logique (2.81) dans laquelle est effectuée l'obtention du signal de commande à partir desdites au moins deux grandeurs de mesure ou grandeurs pilotes de telle sorte que lors du dépassement d'une valeur prédéterminée de l'une des grandeurs, un signal de commande est émis pour un fonctionnement du moins par intervalle de l'appareil d'amenée d'air (4; 4a, 4b) pour assurer une amenée d'air frais, et en ce que le signal de commande est obtenu par ailleurs à partir de relations prédéterminées entre les grandeurs réelles et les grandeurs pilotes.

5. Agencement d'amenée d'air selon l'une quelconque des revendications précédentes, caractérisé en ce que le capteur (5a, 5b ; 2.41, 2.51) est un palpeur de température intérieure pour détecteur la température de l'air de la pièce intérieure ou la température des surfaces d'entourage.

6. Agencement d'amenée d'air selon l'une quelconque des revendications précédentes, caractérisé en ce qu'il est associé à l'unité de commande (7 ; 7a, 7b ; 2.0 ; 30) un palpeur (5b ; 2.51) de la concentration d'une substance chimique dans l'air dans la pièce, en particulier un palpeur de CO₂.

7. Agencement d'amenée d'air selon l'une quelconque des revendications précédentes, caractérisé en ce qu'il est associé à l'unité de commande (7 ; 7a, 7b ; 2.0 ; 30) un palpeur (5b ; 2.611 ; 2.612) en tant que capteur pour détecter la présence de personnes dans la pièce intérieure (2), en particulier un détecteur de mouvement (2.611).

8. Agencement d'amenée d'air selon l'une quelconque des revendications 5 à 7, caractérisé en ce qu'il est associé à l'unité de commande (7 ; 7a, 7b ; 2.0 ; 30) un second palpeur de température (6 ; 2.42) pour détecter la température d'air extérieur, et en ce qu'elle comprend un organe de traitement arithmétique (2.43) pour détecter la différence de température entre la pièce intérieure (2) et l'espace extérieur (1).

9. Agencement d'amenée d'air selon l'une quelconque des revendications précédentes, caractérisé en ce que l'un au moins des capteurs de signal (5a, 5b, 6 ; 2.41, 2.42, 2.51, 2.611, 2.612, 2.613) associés à l'unité de commande (7 ; 7a, 7b ; 2.0 ; 30) est agencé de façon géographiquement séparée de l'appareil d'amenée d'air (3 ; 3a, 3b).

10. Agencement d'amenée d'air selon l'une quelconque des revendications précédentes, caractérisé en ce que l'unité de commande (7 ; 7a, 7b ; 1.0 ; 40) comprend une horloge (1.22, 1.62) pour déterminer des temps de fonctionnement donnés de l'appareil d'amenée d'air (3 ; 3a, 3b) et une unité de traitement logique (2.63) pour mise en relation des signaux de l'horloge (2.62) avec des signaux de l'un au moins des capteurs (5a, 5b, 6 ; 2.41, 2.51, 2.611, 2.612, 2.613) de telle sorte que le signal de commande pour le fonctionnement de l'appareil d'amenée d'air (3 ; 3a, 3b) est émis à des temps prédéterminés avec un débit d'air prédéterminé en fonction du passage au-dessus ou au-dessous des valeurs prédéterminées des grandeurs de mesure et/ou en fonction des réglages d'appareil ou de la présence de personnes dans la pièce intérieure (2).

11. Agencement d'amenée d'air selon la revendication 10, caractérisé en ce que l'horloge (2.62) comprend une horloge en temps réel.

12. Agencement d'amenée d'air selon l'une quelconque des revendications précédentes, caractérisé en ce que l'unité de commande (7 ; 7a, 7b ; 2.0 ; 30) comporte un dispositif combiné horloge/détecteur temporel (2.62) ainsi qu'une mémoire d'habitude d'utilisateur (2.622) pour mémoriser des réglages d'appareil et/ou la présence de personnes dans la pièce intérieure (2) avec association de l'instant de leur présence et une unité de traitement logique (2.63, 2.64) pour la mise en relation des données mémorisées dans la mémoire d'habitude d'utilisateur (2.622) avec des signaux du dispositif combiné horloge/détecteur temporel (2.62) et au choix avec des valeurs mémorisées dans une mémoire de valeur mesurée (2.212) et/ou des valeurs actuelles des grandeurs de mesure ainsi qu'au choix avec des programmes de fonctionnement de l'appareil d'amenée d'air (3 ; 3a, 3b) mémorisés dans une mémoire de programme, et pour l'émission d'un signal de commande à l'organe de réglage (72a, 72b ; 2.11 ; 38) en tant que résultat de la mise en relation.

13. Agencement d'amenée d'air selon l'une quelconque des revendications précédentes, caractérisé en ce que l'unité de commande (7 ; 7a, 7b ; 2.0 ; 30) comprend au moins une unité de traitement localement intégrée dans l'appareil d'amenée d'air (3 ; 3a, 3b) et au moins une unité de traitement localement éloignée de l'appareil d'amenée d'air, dont les signaux de sortie sont amenés en une relation prédéterminée à l'organe de réglage (72a, 72b, 2.11 ; 38).

14. Agencement d'amenée d'air selon l'une quelconque des revendications précédentes, caractérisé en ce que l'unité de commande (7 ; 7a, 7b ; 2.0 ; 30) comprend au moins un étage OU (2.81, 2.53) relié aux sorties d'au moins deux unités de traitement (2.2, 2.3, 2.52), dont la sortie est reliée à l'organe de réglage (2.11).

15. Agencement d'amenée d'air selon l'une quelconque des revendications précédentes, caractérisé par un dispositif interface (3.2) pour établir une liaison de signal via un bus de signal (3.1 ; 39) qui relie l'appareil d'amenée d'air (3 ; 3a, 3b) à des dispositifs externes, en particulier à d'autres appareils d'amenée d'air ou d'évacuation d'air (4a, 4b) et/ou à des palpeurs de mesure (5a, 5b, 6).

16. Agencement d'amenée d'air selon l'une quelconque des revendications précédentes, caractérisé par un indicateur d'état de fonctionnement pour afficher l'état de fonctionnement de l'appareil d'amenée d'air, en particulier pour délivrer un signal d'état de fonctionnement au bus de signal (3.1 ; 39).

17. Agencement d'amenée d'air selon l'une quelconque des revendications précédentes, caractérisé par un capteur/convertisseur de signal (2.71) pour recevoir des signaux d'état de fonctionnement de dispositifs externes, en particulier d'autres appareils d'amenée d'air ou d'évacuation d'air (4a, 4b), et pour délivrer un signal de commande à l'organe de réglage (72a, 72b ; 2.11 ; 38) en fonction du signal d'état de fonctionnement reçu.

18. Agencement d'amenée d'air selon l'une quelconque des revendications précédentes, caractérisé en ce qu'il est prévu un dispositif interface (3.2) pour la liaison de signal de commande avec un poste de commande externe.

19. Agencement d'amenée d'air selon l'une quelconque des revendications précédentes, caractérisé en ce que la commande à microprocesseur ou à programme mémorisé est réalisée de telle sorte qu'elle entraîne la commande d'un retard temporel de l'appareil, en particulier pour une période prédéterminée après réception d'un signal de commande, pour l'arrêt.

20. Agencement d'amenée d'air selon l'une quelconque des revendications précédentes, caractérisé en ce que l'unité de commande (7 ; 7a à 7d ; 2.0 ; 30) comporte un dispositif de commutation pour effectuer une commande manuelle.

21. Agencement d'amenée d'air selon l'une quelconque des revendications précédentes, caractérisé par un organe de réglage pour la commande du courant volumique d'air à travers l'appareil d'amenée d'air (3 ; 3a, 3b), ledit organe comportant un clapet d'air (34) et un dispositif d'actionnement électrodynamique, thermoélectrique ou à moteur électrique (35, 38) pour la modification de la position du clapet d'air dans le courant d'amenée d'air.
